# EUROPEAN PATENT SPECIFICATION

(11) **EP 1 642 491 B1**
(45) Date of publication and mention of the grant of the patent: **16.01.2008**
(21) Application number: 05108948.0
(22) Date of filing: 28.09.2005
(51) Int. Cl.: A01F 15/10

(54) **Feeder device**
Zuführeinrichtung
Dispositif d'introduction

(30) Priority: 29.09.2004 IT RM20040466
(43) Date of publication of application: 05.04.2006
(73) Proprietor: Gallignani S.p.A., 48026 Russi RA (IT)
(72) Inventor: Ravaglia, Paolo, 48012, Bagnacavallo RA (IT)
(74) Representative: Leone, Mario

(56) References cited:
- EP-A- 0 381 068
- EP-A- 0 508 186
- GB-A- 688 154
- US-A- 4 579 052
- US-A- 5 394 682

## Description

The present invention relates to a feeder device, in particular for balers, for forming bales from hay, straw or alike materials.

In the agricultural field the use of machines allowing the collecting of hay, straw or other green or dry produce and the concomitant bale forming from the crop material are known.

Typically, such machines have a collecting unit with which a forage crop is collected, to then convey it in a bale forming chamber arranged above said collecting conveyor unit. The actual bale forming occurs in the forming chamber.

In the forming chamber, the material is rotated through an elastic belt system so as to assume a cylindrical shape, thereby forming the bale.

In the bale forming procedure the starting step is the most critical one, since the bale itself, once it has begun to build up, with its motion of rotation drags the collected material inside the chamber.

At the starting step the material has instead to be pushed inside the chamber, not yet being therein; in order to form a compact and homogeneous bale, it is advisable that the material be continuously and uniformly pushed into the chamber.

For this reason, between the collecting units and the chamber feeding devices are resorted to, having the task of optimally advancing the material to the bale forming chamber.

Commonly used feeding devices comprise a set of teeth penetrating the material from the collecting unit and conveying it to the chamber by either a rotary motion or a reciprocating motion.

Therefore, a first kind of known feeders, referred to as rotary feeders, are constituted by a toothed rotor, which is usually placed above the collected crop material and giving to the latter a continuous motion from the collecting unit to the chamber.

Alternatively to rotary feeders, another known kind, referred to as reciprocating feeders, use a connecting rod - crank system to give to a plurality of blades or teeth, arranged on a suitable bar, a path linear and such as to convey the collected crop material to the chamber.

Both devices entail drawbacks, as in neither the step of material penetration and release, which is always the most critical one, is optimally carried out.

In fact, in the penetration step the rotary feeder tends to compress the material, with an entailed energy waste, and moreover to break the collected crop produce. Above all in the case of dry produce the crop should be as intact as possible, whereas the rotary feeder unavoidably causes a fractioning of the material.

Moreover, also the release step occurs less than optimally, as there has to be used a system for detaching the material off the teeth; such a system, by sliding the material on a detachment plane, causes strong friction and eventually wear.

In order to partially overcome this problems, rotary feeders comprising a plurality of sets of teeth are known wherein the teeth of each set are driven along a desired orientation by a roller moving inside a curved guide. Example of such device are described in the United State patent US 4,579,052 or in the European patent application 508 186.

Anyhow, even this kind of rotary feeders are subjected to wear in the shape coupling between the roller and the guide and, furthermore, are remarkably heavy and large-sized, thereby requiring high powers for their handling.

On the other hand, the reciprocating feeders entail the drawback of not continuously pushing the material, as the teeth, being moved by a connecting rod - crank device, cyclically penetrate the material. When the teeth do not bite onto the material, the latter tends to move away or retract from the bale forming chamber, compressing the produce from the feeder.

Hence, in this case the produce does not continuously get to the chamber; therefore the bale is not perfectly homogeneous. Moreover, as in the case of the rotary feeder, when the material is compressed an energy waste ensues.

To overcome this drawback, in reciprocating systems on the market the teeth do not lie on a single line but disappear in a reciprocating manner under the floor, since the teeth-bearing bar is implemented in two or three parts connected therebetween by means of a crank, as described in the European patent application 381 068.

In this case, a system dynamically more balanced and kinematically more regular is attained, yet the produce undergoes a cutting action as the teeth penetrating it do not concomitantly rise along the entire width of the feeding channel; therefore, the stress on the produce increases.

Hence, the technical problem underlying the present invention is to provide a feeder for balers allowing to overcome the drawbacks mentioned above with reference to the known art.

Such a problem is solved by a feeder device according to claim 1.

Moreover, the present invention provides a baler comprising said device and according to claim 13.

The present invention provides several relevant advantages. The main advantage lies in that the crop material is continuously sent, without it being compressed in any way, to the bale forming chamber, by means of a mechanism of reasonable weight and dimensions.

A further advantage lies in that according to the feeder of the present invention the produce undergoes no mechanical action cutting or spoiling it.

Other advantages, features and the operation modes of the present invention will be made apparent from the following detailed description of a preferred embodiment thereof, given by way of example and without limitative purposes. Reference will be made to the figures of the annexed drawings, wherein:
figure 1 is a sectional side view showing a baler comprising the feeder device according to the present invention;
figure 2 is a perspective view showing the feeder device according to the present invention;
figure 3A is a side view showing a tooth used in the feeder device according to the present invention, with the related operating (forming) path, details of figure 2;
figure 3B is a partially sectional side view showing a pair of teeth used, shifted out of phase of 180° to the related operating path, details of figure 2; and
figure 4 is a perspective view, illustrating a gear wheel to which there are connected the teeth for moving the material by means of a suitable bar, and related means for connecting the gear wheel to a support frame.

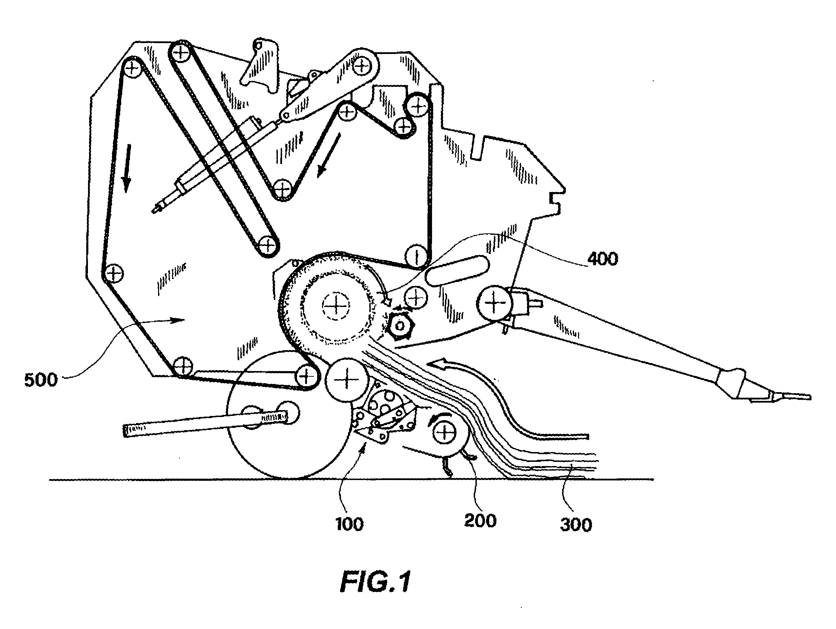

Initially referring to figure 1, a baler for forming a bale 400 comprises a collecting unit 200 for raising from the ground crop material 300 like hay, straw or other green or dry produce, a forming chamber 500 for the bale 400 and a feeder device 100 allowing to convey the material 300 from the collecting unit 200 to the chamber 500.

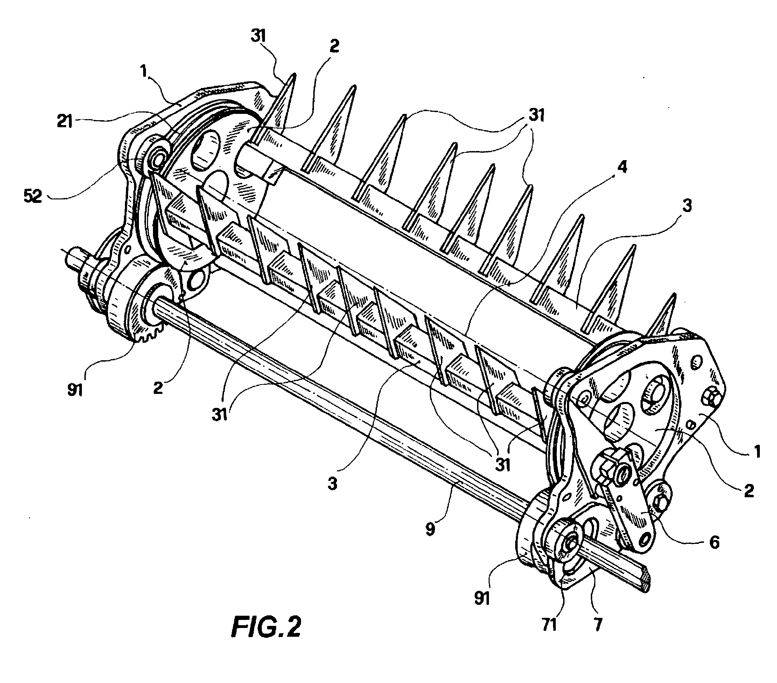

The feeder device 100, illustrated in detail in figure 2, comprises a support frame 1, connecting the device to the baler and housing and joining the remaining components.

To the frame 1 there are connected two gear wheels 2, arranged facing therebetween at opposite ends of the frame 1 and positioned so as to have same axis of rotation 4.

The device 100 further comprises means for connecting the gear wheels 2 to the frame 1. In particular, the connecting means that will be detailed below is such as to allow the rotation of the gear wheels 2.

Between the gear wheels 2 there extend, parallel to the axis of rotation 4, two bars 3, located in a diametrically opposed position, and a set of teeth 31 being fixed on each bar. The teeth 31 are rigidly connected to the bars 3 by means of welding or other equivalent joining means, and have a wedge-shaped section, so that the material 300, penetrated from the bottom, can be raised and dragged by the same teeth 31.

For the material to be then released, once in proximity of the bale forming machine, it is necessary that the teeth, just due to their shape, be retracted, thereby releasing the material.

The bars 3 are fixed in a position eccentric to the gear wheels 2, by bearings fixed in suitable seats made on the latter.

More precisely, onto the gear wheels 2 holes are made, on which there can be mounted the bearing and the related end of the bars 3. Thus, the bars 3 are free to rotate with respect to the gear wheels 2.

Advantageously, such an arrangement allows each bar 3 to be operated by same moving means, which, in the present embodiment, comprises said gear wheels 2. It is also evident that different solution could be arisen in order to provide such moving means, always allowing the operating of each bar 3.

Furthermore, each bar 3 is rigidly connected to a respective connecting rod 6, so that the bars 3, the teeth 31 and the connecting rods 6 are integral thereamong.

The teeth 31 and the connecting rods 6 are arranged substantially along the same direction, defined by the connecting rods 6, and extend oppositely the ones to the others with reference to the bar.

Hence, the bars being fixed to the gear wheels with a constraint system allowing exclusively the rotation thereof, also the teeth 31 and the connecting rods 6 may exclusively rotate with respect to the gear wheels 2.

Moreover, it is likewise evident that a tilt of the connecting rod 6 yields an entailed rotation, with respect to the centre defined by the abovedescribed bearings of the teeth 31, as connected to the bar.

To allow the gear wheels to set in rotation the bars 3, it is necessary that the connecting rods 6, accompanying the motion of the bars according to modes that will be disclosed hereinafter, generate no interference whatsoever with the bars themselves.

Therefore, the connecting rods 6 should not be positioned in the region comprised between the two gear wheels 2, but externally thereto. In order to make this possible, the frame 1 has a circular opening at both gear wheels 2; thus the bars 3 can provide an extension allowing the connection thereof to the connecting rods 6 outside of the zone comprised between the two gear wheels 2.

However, evidently in order to make this possible the gear wheels cannot be fixed to the frame centrally by means of bearings, as traditionally is the case; rather, the frame-connecting means should be arranged external and circumferentially to the wheels 2.

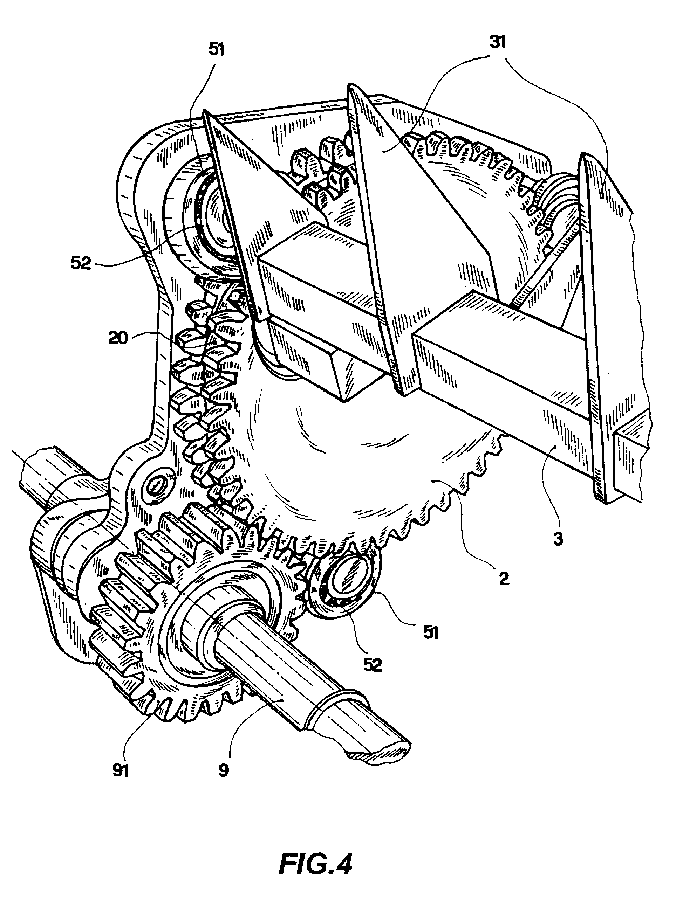

In particular, in the given embodiment and referring to figure 4, the gear wheels 2 have a seat 21, made along their pitch surface. The seat 21 is machined, removing, in a median region of the pitch surface, the teeth of the gear wheels 2 down to the base surface. Thus, the gear wheel region corresponding to the seat 21 is smoothed, allowing therein the rolling of connecting wheels 51, pivotable and mounted onto the frame on respective bearings 52 (better illustrated hereinafter).

According to this preferred embodiment, the seat 21 is made along the median plane of the gear wheels 2, so as to leave defined the sets of teeth at the sides of the seat 21 and, concomitantly, implementing with the wheels 51 the constraints between the teeth of the gear wheels 2 preventing any lateral motion to the wheels 2.

In fact, onto the frame 1 there are fixed, by bearings 52, three wheels 51 located according to the vertexes of an equilateral triangle. The arrangement of the three wheels 51 in the seat 21 allows to keep the gear wheels 2 integral to the frames
1. Moreover, the wheels 51 being able to roll inside the seat 21, also the gear wheels 2 are free to rotate with respect to the frame 1 about the axis of rotation 4.

The bearings 52, along with the wheels 51, are mounted on cams, not shown in the figure, allowing to adjust the play between the seat 21 and the wheels 51.

Through the use of such connecting means, it is possible to extend the bars 3 so as to connect them to the connecting rod 6, so that the latter be located not in the region comprised between the wheels 2, but externally thereto, not interfering with the motion of the bars.

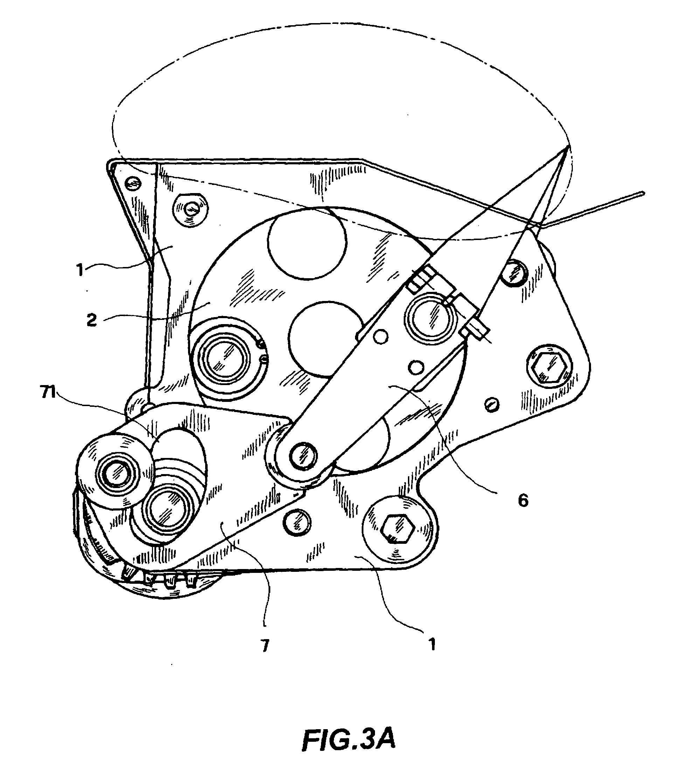

Referring to figure 3A, the connecting rods 6, connected each to a different bar 3 and arranged therebetween at opposite sides of the frame 1, are joined by means of a hinge to a first end of respective cranks 7, whose second end is engaged on a respective connection to the frame 1.

In figure 3A there can be observed one side of the frame 1. With regard to the opposite side, it is understood that a respective connecting rod 6 and crank 7 will be connected to the additional bar that is fixed in a position diametrically opposed to the preceding one.

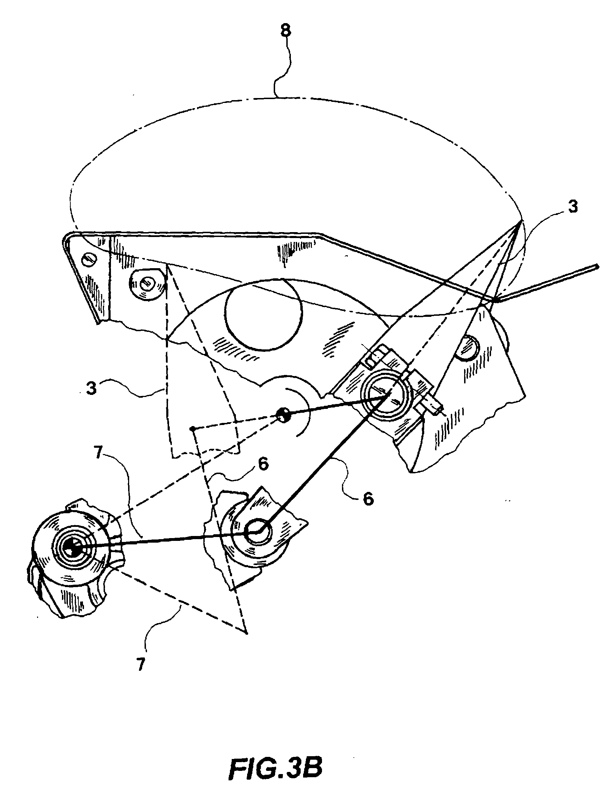

As illustrated in figure 3B, the aboveindicated connecting rod 6 - crank 7 system, along with the frame 1 and the gear wheel 2, form a four-bar linkage (articulated quadrilateral) kinematic system, in which one end of the crank 7 and the gear wheel 2 are fixed to the frame 1, whereas the other two vertexes of the four-bar quadrilateral follow paths attainable by means of a simple kinematic analysis once the system geometry is known.

Always in figure 3B it is illustrated, depicted with a broken line, the second four-bar mechanism, located at the opposite end of the frame 1 with respect to the first mechanism and it also formed by a connecting rod 6 - crank 7 system, along with frame 1 and gear wheel 2.

As described in the foregoing, the teeth 31 are rigidly connected to the bar; therefore, upon determining the position of the connecting rod 6, also the position of the teeth 31, highlighted by the path depicted with a chain, is immediately determined by a kinematic analysis of the abovedescribed four-bar mechanism.

More precisely and referring now to figure 3B, in order to feed the material 300 the teeth 31 must follow a path 8 such as to comprise a first step of rising, to penetrate and raise the material 300 from the collecting unit 200, a second step of advancing to the forming chamber 500, a third step in which part of the teeth descend to release the material 300, and lastly a final step in which they are returned to the starting position.

Moreover, to prevent the material 300 from undergoing stresses causing its wear or cutting, during the traveling along the path 8 it is advisable that the tooth always keeps orthogonal to the direction of the motion itself; for this reason as well, the making of the path 8 is entrusted to a four-bar mechanism.

The operation described hereto is analogous to what takes place in a traditional reciprocating feeder; evidently, however, in such a case during the last step in which the tooth returns to the starting position the material 300, not pushed anymore, tends to return to the collecting unit 200.

Instead, in this case two bars provided with teeth 31 are used; the former, being connected to two alike connecting rod - crank pairs following the same path 8, yet being suitably mounted at diametrically opposed positions of the gear wheels 2 (i.e., shifted 180° out of phase), travel the path 8 at different and opposite instants.

More precisely, given the 180°-shifting, at the instant in which one row of teeth 31 penetrates the material 300, the other row has ended the pushing to the chamber 500 and releases the material, which, thus, is subjected to continuous moving.

Therefore, in the present preferred embodiment the path 8 onto which the plurality of teeth 31 associated to each bar 3 travels is substantially identical yet cyclically shifted out of phase with respect to the path of the plurality of teeth 31 associated to the other bars 3.

Anyhow, it is also evident that different embodiments could involve different configuration of the kinematic mechanism, or different lengths of the teeth, such that the path followed by each plurality of teeth could be slightly different from the other yet analogous in versus and direction.

The use of two different rows of teeth 31, mounted on two bars 3, is possible thanks to the use of said connecting means arranged externally to the gear wheels 2, preventing the interference unavoidably arising in case the connecting rods 6 were them also comprised between the two gear wheels 2.

Moreover, the action of the teeth 31 is such as to keep substantially always orthogonal to the direction of motion, just to avoid spoiling the material, according to what has been disclosed in the foregoing.

In addition, the feeder device according to the present invention has reasonable dimensions, since in the same space in which traditionally a single row of teeth is housed two different bars 3 provided with teeth 31 are present, both operating on the material 300.

Referring again to figure 2, the system motion is entrusted to the gear wheels 2 that are set in rotation by means of additional gear wheels 91, connected to a single bar 9. The bar 9, connected by means of said additional gear wheels 91, drives motion to both the gear wheels 2, in a manner such as to allow a perfect synchronism between the latter.

The correct path 8 of the teeth 31 for feeding to the chamber 500 is linked to the dimensioning of connecting rod 6 and related crank 7, which may occur, upon pre-selecting the required path and singling out the provisional dimensions of the system, by a kinematic synthesis of the four-bar mechanism.

In particular, there could be attained different solutions to the problem; in the given embodiment, it is used a quadrilateral in which the sole member undergoing a complete rotation and not inverting its motion is the gear wheel 2.

Also, similar solution can be used in case of different number of the bars, or different positioning thereof.

In fact, it is evident that the feeder device according to the present invention could also comprise more than two bars, without any remarkable difference in achieving the solution of the technical problem.

These dimensional choices enable to use the gear wheel 2 as mover of the mechanism. Moreover, the connecting rod 6 and the crank 7, having a limited travel, require a lesser space, unlike what would occur if they were to undergo a complete rotation to travel the path 8.

A further advantage of the present invention lies in that the location of the bearings 52, arranged in a number at least equal to three, at the median plane of the gear wheel 2, prevents any overturning torque from acting onto the wheels 2, since the constraining reactions of the bars 3 at the support points onto the gear wheels 2 yield nil resulting torque, the forces at issue being acting onto the same plane.

Moreover, the arrangement of the bars 3, located in a position diametrically opposed with respect to the centre of the wheels 2, and anyhow separated by equal periphery sectors, allows to obtain a dynamically balanced system.

In fact, the presence of unbalanced rotating masses, as occurring in the case of known-art reciprocating feeders, requires the use of balancing masses, unavoidably originating energy waste.

The present invention has hereto been described with reference to preferred embodiments thereof. It is understood that there could be other embodiments afferent to the same inventive kernel, all falling within the protective scope of the claims set forth hereinafter.

## Claims

1. A feeder device (100) comprising at least two bars (3), each of them comprising a plurality of teeth (31), the plurality of teeth (31) associated to each bar (3) travelling a path (8) that is cyclically shifted out of phase with respect to the path of the plurality of teeth (31) associated to the other bars (3), said bars (3) being rigidly connected to a respective connecting rod (6) of a four-bar linkage driving said plurality of teeth (31) of each bar (3) to said path (8), **characterized in that** said bars (3) extends between opposite ends of a support frame (1).

2. A feeder device (100) according to the preceding claim, wherein said bars (3) are eccentrically mounted on wheels (2), entrusted to a system motion, and arranged facing therebetween at opposite ends of said frame (1), said connecting rod (6) being positioned externally to said wheels (2).

3. A feeder device (100) according to any of the preceding claims, wherein said plurality of teeth (31) keeps substantially orthogonal to the direction of said path (8), during the motion of said at least two bars (3).

4. A feeder device (100) according to any of the preceding claim, comprising gear wheels (2) arranged facing therebetween and having same axis of rotation (4), said at least two bars (3) being hingedly mounted between said gear wheels (2) in a direction parallel to said axis of rotation (4), and eccentrically with respect to said gear wheels (2), wherein the arrangement is such that each full rotation of said gear wheels (2) implements at least two passes of teeth (31) with respect to a fixed point of said path (8).

5. The feeder device (100) according to the preceding claim, wherein said gear wheels (2) are connected to a support frame (1) by at least one wheel (51) mounted on a bearing (52) on said frame (1), the arrangement being such that said at least one wheel (51) is apt to cooperate with a respective peripheral seat (21) obtained on each gear wheel (2).

6. A feeder device (100) according to any of the preceding claims, comprising a four-bar linkage associated to each of said at least two bars (3), said linkage comprising said connecting rod (6) and a crank (7), each of said at least two bars (3) being rigidly constrained to a respective connecting rod (6) in such way that each plurality of teeth (31) of said at least two bars (3) is driven to said path (8) cyclically shifted out of phase.

7. The feeder device (100) according to the preceding claim, wherein said seat (21) is obtained at the median plane of said gear wheels (2).

8. The feeder device (100) according to one or more of the preceding claims, wherein said teeth (31) are arranged substantially along the direction defined by said connecting rods (6).

9. The feeder device (100) according to one or more of the preceding claims, wherein said at least two bars (3) are mounted on said gear wheels (2) in a position substantially diametrically opposite with respect to said centre of rotation (4), or anyhow separated by equal periphery sectors, such that said two bars (3) form a dynamically balanced system.

10. The feeder device (100) according to one or more of the preceding claims, wherein said connecting rods (6) are driven by the rotation of said gear wheels (2).

11. The feeder device (100) according to one or more of the preceding claims, wherein said connecting rods (6) are arranged on opposite sides of said frame (1).

12. The feeder device (100) according to one or more of the preceding claims, wherein in said four-bar linkage said cranks (7) are arranged so as to swing between two preset points without performing a full rotation.

13. The feeder device (100) according to one or more of the preceding claims, wherein said path (8) comprises a first step of rising said teeth (31), a second step of advancing thereof, a third step in which part of the teeth descend, and lastly a final step in which said teeth 31 are returned to the starting position.

14. A baler comprising a feeder device (100) according to any of the preceding claims, said feeder device (100) feeding a crop material (300) from a collecting unit (200) to a forming chamber (500).

## Patentansprüche

1. Zuführvorrichtung (100) umfassend wenigstens zwei Stäbe (3), wobei jeder davon eine Vielzahl von Zähnen (31) umfasst, die Vielzahl von Zähnen (31), die mit dem Stab (3) verbunden sind, eine Bahn (8) durchlaufen, die zyklisch phasenverschoben ist in Bezug auf die Bahn der Vielzahl von Zähnen, die mit dem anderen Stab (3) verbunden sind, die Stäbe (3) starr mit einem entsprechenden Verbindungsstab (6) einer Vierstab-Kopplung verbunden sind, welche die Vielzahl von Zähnen (31) jedes Stabes (3) auf der Bahn (8) bewegt, **dadurch gekennzeichnet, dass** die Stäbe (3) sich zwischen gegenüber liegenden Enden eines Tragrahmens (1) erstrecken.

2. Zuführvorrichtung (100) gemäß dem vorangehenden Anspruch, worin die Stäbe (3) exzentrisch auf Rädern (2) befestigt sind, die einer Systembewegung ausführen, und derart angeordnet, dass diese an gegenüberliegenden Enden des Rahmens (1) einander zugewandt sind, worin die Verbindungsstäbe (6) außen liegend zu den genannten Räder (2) angeordnet sind.

3. Zuführvorrichtung (100) gemäß dem irgendeinem der vorangehenden Ansprüche, worin die Vielzahl von Zähnen (31), während der Bewegung der wenigsten zwei Stäbe (3), im Wesentlichen orthogonal zu der Richtung der Bahn (8) bleibt.

4. Zuführvorrichtung (110) gemäß dem irgendeinem der vorangehenden Ansprüche, umfassend Zahnräder (2), die dazwischen einander zugewandt angeordnet sind und die gleiche Rotationsachse (4) haben, die wenigstens zwei Stäbe (3) gelenkig in einer parallelen Richtung zur Rotationsachse (4) zwischen den Zahnrädern (2) angeordnet sind, und exzentrisch in Bezug auf die Zahnräder (2), wobei die Anordnung derart ist, dass jede volle Drehung der Zahnräder (2) wenigstens zwei Durchgänge der Zähne (31) in Bezug auf einen festen Punkt auf der Bahn (8) bewirkt.

5. Zuführvorrichtung (100) gemäß dem vorangehenden Anspruch, worin die Zahnräder (2) mit einem Tragrahmen (1) mittels wenigstens eines Rades (51) verbunden sind, welches auf einem Lager (52) an dem Rahmen (1) angeordnet ist, wobei die Anordnung derart ist, dass wenigstens ein Rad (51) geeignet ist, mit einer entsprechenden peripheren Aufnahme (21), welche an jedem Zahnrad (2) vorhanden ist, zusammenzuwirken.

6. Zuführvorrichtung (100) gemäß irgendeinem der vorangehenden Ansprüche, umfassend eine Vierstab-Kopplung, welche mit jedem der wenigstens zwei Stäbe (3) verbunden ist, wobei die Kopplung den Verbindungsstab (6) und eine Kurbel (7) umfasst, jeder der mindestens zwei Stäbe (3) starr mit einem entsprechenden Verbindungsstab (6) derart verbunden ist, dass jede Vielzahl von Zähnen (31) der wenigstens zwei Stäbe (3) zyklisch phasenverschoben auf der Bahn (8) bewegt wird.

7. Zuführvorrichtung (100) gemäß dem vorangehenden Anspruch, worin die Aufnahme (21) auf der Medianebene der Zahnräder (2) angeordnet ist.

8. Zuführvorrichtung (100) gemäß einem oder mehrerer der vorangehenden Ansprüche, worin die Zähne (31) im Wesentlichen entlang der Richtung angeordnet sind, welche durch die Verbindungsstäbe (6) definiert ist.

9. Zuführvorrichtung (100) gemäß einem oder mehrerer der vorangehenden Ansprüche, worin die wenigstens zwei Stäbe (3) auf den Zahnrädern (2) in einer in Wesentlichen diametral dem Rotationszentrum (4) gegenüber liegenden Position angebracht sind, oder in irgendeiner Weise durch gleiche periphere Sektoren beabstandet sind, derart, dass die zwei Stäbe (3) ein dynamisch ausbalanciertes System bilden.

10. Zuführvorrichtung (100) gemäß einem oder mehrerer der vorangehenden Ansprüche, worin die Verbindungsstäbe (6) durch die Drehung der Zahnräder (2) angetrieben werden.

11. Zuführvorrichtung (100) gemäß einem oder mehrerer der vorangehenden Ansprüche, worin die Verbindungsstäbe (6) auf einander gegenüberliegenden Seiten des Rahmens (1) angeordnet sind.

12. Zuführvorrichtung (100) gemäß einem oder mehrerer der vorangehenden Ansprüche, worin die Kurbeln (7) in der Vierstab-Kopplung derart angeordnet sind, dass diese zwischen zwei vorherbestimmten Punkten ohne Ausführung einer vollständigen Rotation schwingen.

13. Zuführvorrichtung (110) gemäß einem oder mehrerer der vorangehenden Ansprüche, worin die Bahn (8) einen ersten Schritt des Anhebens der Zähne (31), einen zweiten Schritt deren Fortschreitens, einen dritten Schritt, in welchem die Zähne teilweise absenken und schließlich einen letzten Schritt umfasst, in welchem die Zähne (31) in die Ausgangsposition zurückgebracht werden.

14. Ballenmaschine, enthaltend eine Zuführvorrichtung (100) gemäß irgendeinem der vorangehenden Ansprüche, worin die Zuführvorrichtung (100) Erntegut (300) aus einer Sammeleinheit (200) in eine Formkammer (500) zuführt.

## Revendications

1. Dispositif d'alimentation (100) comprenant au moins deux barres (3), chacune d'entre elles comprenant une pluralité de dents (31), la pluralité de dents (31) associée à chaque barre (3) se déplaçant sur un chemin (8) qui est déphasé de manière cyclique par rapport au chemin de la pluralité de dents (31) associée aux autres barres (3), lesdites barres (3) étant raccordée de manière rigide à une bielle respective (6) d'un quadrilatère articulé entraînant ladite pluralité de dents (31) de chaque barre (3) sur ledit chemin (8), **caractérisé en ce que** lesdites barres (3) s'étendent entre les extrémités opposées d'un cadre de support (1) .

2. Dispositif d'alimentation (100) selon la revendication précédente, dans lequel lesdites barres (3) sont montées de manière excentrique sur des roues (2), chargées du mouvement du système, et agencées de face entre elles au niveau des extrémités opposées dudit cadre (1), ladite bielle (6) étant positionnée de manière externe par rapport auxdites roues (2).

3. Dispositif d'alimentation (100) selon l'une quelconque des revendications précédentes, dans lequel ladite pluralité de dents (31) reste sensiblement orthogonale à la direction dudit chemin (8), pendant le mouvement desdites au moins deux barres (3).

4. Dispositif d'alimentation (100) selon l'une quelconque des revendications précédentes, comprenant des roues dentées (2) agencées de face de manière intermédiaire et ayant le même axe de rotation (4), lesdites au moins deux barres (3) étant montées de manière articulée entre lesdites roues dentées (2) dans une direction parallèle audit axe de rotation (4), et de manière excentrique par rapport auxdites roues dentées (2), l'agencement étant tel que chaque rotation complète desdites roues dentées (2) réalise au moins deux passages de dents (31) par rapport à un point fixe dudit chemin (8).

5. Dispositif d'alimentation (100) selon la revendication précédente, dans lequel lesdites roues dentées (2) sont raccordées à un cadre de support (1) par au moins une roue (51) montée sur un palier (52) dudit cadre (1), l'agencement étant tel que ladite au moins une roue (51) est en mesure de coopérer avec un siège périphérique respectif (21) obtenu sur chaque roue dentée (2).

6. Dispositif d'alimentation (100) selon l'une quelconque des revendications précédentes, comprenant un quadrilatère articulé associé à chacune desdites au moins deux barres (3), ledit quadrilatère articulé comprenant ladite bielle (6) et une manivelle (7), chacune desdites au moins deux barres (3) étant contrainte de manière rigide par une bielle respective (6) de telle sorte que chaque pluralité de dents (31) desdites au moins deux barres (3) soit entraînée sur ledit chemin (8) déphasé de manière cyclique.

7. Dispositif d'alimentation (100) selon la revendication précédente, dans lequel ledit siège (21) est obtenu au niveau du plan médian desdites roues dentées (2).

8. Dispositif d'alimentation (100) selon l'une ou plusieurs des revendications précédentes, dans lequel lesdites dents (31) sont agencées sensiblement le long de la direction définie par lesdites bielles (6).

9. Dispositif d'alimentation (100) selon l'une ou plusieurs des revendications précédentes, dans lequel lesdites au moins deux barres (3) sont montées sur lesdites roues dentées (2) dans une position sensiblement diamétralement opposée audit centre de rotation (4) ou autrement séparée par des secteurs périphériques égaux, de sorte que lesdites deux barres (3) forment un système équilibré de manière dynamique.

10. Dispositif d'alimentation (100) selon l'une ou plusieurs des revendications précédentes, dans lequel lesdites bielles (6) sont entraînées par la rotation desdites roues dentées (2).

11. Dispositif d'alimentation (100) selon l'une ou plusieurs des revendications précédentes, dans lequel lesdites bielles (6) sont agencées sur des côtés opposés dudit cadre (1).

12. Dispositif d'alimentation (100) selon l'une ou plusieurs des revendications précédentes, dans lequel dans ledit quadrilatère articulé lesdites manivelles (7) sont agencées de manière à osciller entre deux points prédéfinis sans réaliser de rotation complète.

13. Dispositif d'alimentation (100) selon l'une ou plusieurs des revendications précédentes, dans lequel ledit chemin (8) comprend une première étape consistant à lever lesdites dents (31), une deuxième étape consistant à les faire avancer, une troisième étape dans laquelle une partie des dents descend, et enfin une étape finale dans laquelle lesdites dents 31 reviennent dans la position de départ.

14. Presse-ramasseuse comprenant un dispositif d'alimentation (100) selon l'une quelconque des revendications précédentes, ledit dispositif d'alimentation (100) fournissant un matériau de récolte (300) à une chambre de mise en balle (500) depuis une unité de récolte (200).
